(19) Europäisches Patentamt
European Patent Office
Office européen des brevets

(11) **EP 1 434 223 B1**

(12) **EUROPEAN PATENT SPECIFICATION**

(45) Date of publication and mention
of the grant of the patent:
**02.11.2006 Bulletin 2006/44**

(51) Int Cl.:
***G11B 27/00*** *(2006.01)* ***G11B 20/00*** *(2006.01)*

(21) Application number: **03028243.8**

(22) Date of filing: **09.12.2003**

(54) **Method and apparatus for multiple data access with pre-load and after-write buffers in a video recorder with disk drive**

Verfahren und Vorrichtung zum Datenmehrfachzugriff mit pre-load und after-write Puffer in einem Videorecorder mit Plattenlaufwerk

Procédé et dispositif pour accès multiple à des données avec pre-load et after-write buffer dans un enregistreur vidéo avec unité de disque.

(84) Designated Contracting States:
**DE FR GB**

(30) Priority: **26.12.2002 JP 2002378270**

(43) Date of publication of application:
**30.06.2004 Bulletin 2004/27**

(73) Proprietor: **KABUSHIKI KAISHA TOSHIBA Tokyo (JP)**

(72) Inventor: **Uwatoko, Katsuki,
c/o Toshiba Corporation
Minato-ku
Tokyo 105-8001 (JP)**

(74) Representative: **Henkel, Feiler & Hänzel
Patentanwälte
Maximiliansplatz 21
80333 München (DE)**

(56) References cited:
**EP-A- 0 837 469          EP-A- 1 278 191
DE-A- 3 721 576          US-A- 4 754 399
US-B1- 6 272 589          US-B1- 6 385 711**

**Description**

The present invention generally relates to the field of a digital recording/reproducing apparatus and more particularly to a video recorder which uses a disk drive as its recording medium.

In recent years, for example, a video recorder which uses a hard disk drive (hereinafter referred to as a disk drive) as its recording medium has been developed. Such a video recorder is usually called an HDD video recorder for recording and reproducing broadcast programs and is a kind of personal video recorder.

The performance of data access to the disk drive is important for the video recorder to record or reproduce stream data such as a video picture received through a TV tuner. More specifically, because an application program for recording or reproducing stream data needs continuous data access, it guarantees throughput (usually, data transfer speed) of the data access.

Recently, multiple stream data can be accessed at the same time by a single physical disk (recording medium). That is, this is a data access for multiple application programs to simultaneously record or reproduce broadcast programs in different channels (see Jpn. Pat. Appln. KOKAI Publication No. 10-333984).

For a single stream data access, the throughput of the data access can be guaranteed. However, for access of plural stream data, the throughput of those data accesses is difficult to guarantee. To guarantee the throughput of the data accesses, appropriate scheduling for managing the buffer area for storing data when the disk drive is accessed, in accordance with a request from the application program, is needed.

Document US 6272589 defines a method for writing data to a disk including defining a cache buffer of variable size in accordance with the size of the data, data transfer time, disk rotation time, decrease of data amount per rotation, difference between buffer input and buffer output transfer speeds.

Document US 4757399 defines a method for controlling data transfer between a buffer memory and a plurality of input/output devices, using pre-load and after-write processes dependent on the amount of data. Each of the n active input/output devices is allocated a capacity K/mn of units of size m within the total capacity K of the data buffer.

US 6385711, and EP 1278191 A, which has been puplished after the priority date of the present application, disclose a disk storage apparatus according to the pre-characterizing part of claim 1 and a method according to the pre-characterizing part of claim 4.

An object of the present invention is to provide a disk storage apparatus for a video recorder including facilities for buffer management.

According to the present invention the above object is achieved by a disk storage apparatus according to claim 1 and by a method according to claim 4. The dependent claims are directed to different advantageous aspects of the invention.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing a configuration of a video recorder according to an embodiment of the present invention;
FIG. 2 is a block diagram showing a software configuration of the video recorder;
FIG. 3 is a flow chart for explaining recording/reproduction operation according to the embodiment;
FIG. 4 is a diagram for explaining the condition under a buffer management function according to the embodiment;
FIG. 5 is a flow chart for explaining a processing procedure corresponding to multiple data access requests according to the embodiment; and
FIG. 6 is a flow chart according to another embodiment.

Hereinafter, embodiments of the present invention will be described with reference to the accompanying drawings.

(Configuration of recording/reproducing apparatus)

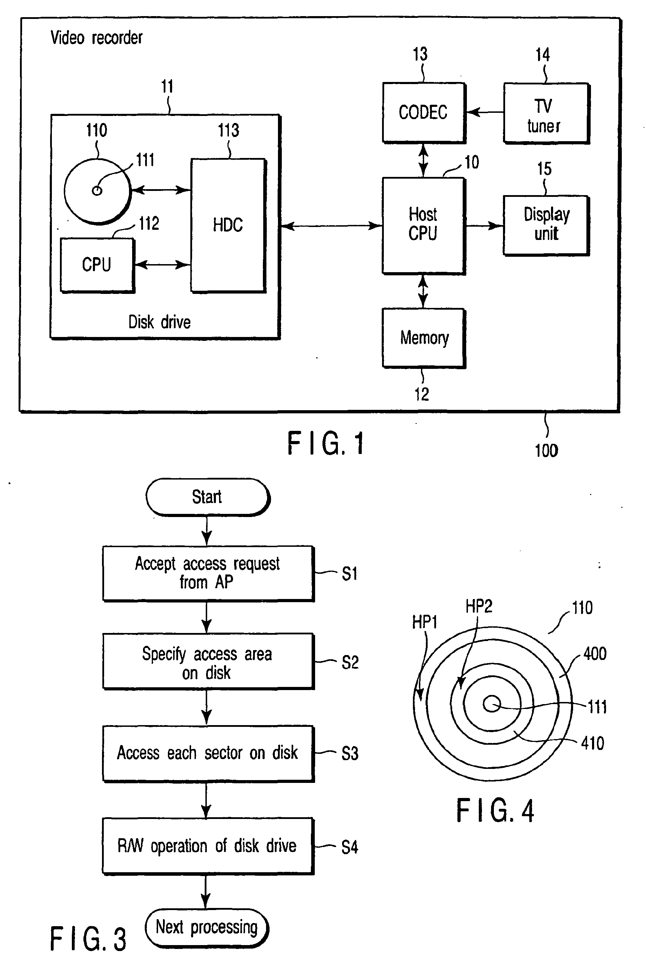

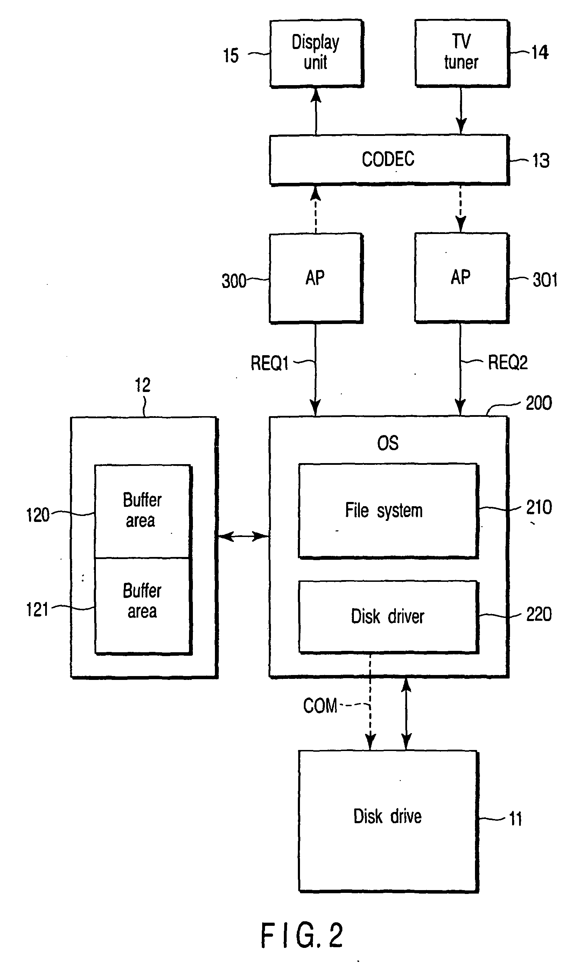

FIG. 1 is a block diagram of a video recorder 100 assumed as a recording/reproducing apparatus according to this embodiment. Meanwhile, the recording/reproducing apparatus of this embodiment may be built into, for example, a digital TV set, not an independent video recorder 100.

The video recorder 100 comprises mainly a host computer (host CPU) 10 which is a main control unit, a disk drive 11, a TV tuner 14 for receiving a broadcast program and a display unit 15.

The disk drive 11 is a hard disk drive which utilizes a disk 110 which is a magnetic recording medium. The disk 110 is rotated by a spindle motor 111. The disk drive 11 records stream data in a broadcast program under the control of the host CPU 10 into the disk 110 and reproduces stream data from the disk 110.

The disk drive 11 contains a microprocessor (CPU) 112 for controlling a read/write mechanism to the disk 110 and a disk controller (HDC) 113 which constitutes an interface with the host 10.

The host CPU 10 executes an application program (referred to as AP or sometimes called just application) which executes recording/reproducing operation of the stream data under the control of an operating system (OS) (see FIG. 2).

The host CPU 10 has a management function for managing a buffer area necessary for the recording/reproducing operation of the stream data. Usually, a memory 12 is a main memory for the host CPU 10, and constituted of a dynamic RAM (DRAM). The memory 12 is used for securing a buffer area necessary for application's data access under the control of the OS (more specifically, disk driver).

The TV tuner 14 selects a specified broadcast program from TV broadcasting such as digital broadcasting and outputs corresponding stream data to a CODEC 13. The CODEC 13 is hardware for compressing or decompressing stream data under a specified standard. The CODEC 13 may be a processing section which is realized by software. The display unit 15 has a display which displays various kinds of information relating to the recording/reproducing operation under the control of the host CPU 10.

The video recorder 100 has an output unit for outputting stream data reproduced under the control of the host CPU 10 to, for example, a TV set. This output unit enables a reproduced video picture displayed on a screen of the TV set.

(System Configuration)

FIG. 2 is a block diagram showing a configuration of software in mainly the host CPU 10.

As shown in FIG. 2, an OS 200 including a file system 210 and a disk driver 220 is incorporated in the host CPU 10. The OS 200 accesses the disk drive 11 according to data access requests (REQ1, REQ2) accompanied by the recording/reproducing operation from multiple applications (AP) 300, 301.

More specifically, the file system 210 determines a place (address) on the disk 110 of the disk drive 11 whose access (read request or write request) is requested by the applications 300, 301. The disk driver 220 issues a command (COM) for accessing the disk drive 11 according to an access request and address transferred by the file system 210. That is, the disk driver 220 is software (a kind of device driver) for controlling input/output of read/write data (stream data) to/from the disk drive 11.

If, for example, the access request (REQ1) from the application 300 is a read request, the disk driver 220 transfers a read command containing an address on the disk 110 to the disk drive 11. On the other hand, if the access request (REQ2) from the application 301 is a write request, the disk driver 220 transfers a write command containing an address on the disk 110 to the disk drive 11.

Further, the disk driver 220 controls the buffer area in the memory 12 necessary for data access as described later. More specifically, the disk driver 220 executes buffer management processing for securing a buffer area (that is, data amount to be transferred) necessary for pre-reading operation and post-write operation of the stream data in the memory 12 in order to make continuous access upon the stream data.

(Data Access Operation Accompanied by Recording/Reproducing Operation)

The recording/reproducing operation of this embodiment will be described with reference to FIGS. 3 to 5 as well as FIGS. 1 and 2.

First, the procedure for data access operation accompanied by the recording/reproducing operation of the video recorder 100 will be described with reference to the flow chart of FIG. 3 and FIG. 4.

According to this embodiment, as shown in FIG. 4, a first recording area 400 and a second recording area 410 are assumed on the disk 110 for convenience. The first recording area 400 includes multiple tracks relatively on an outer periphery, serving for a recording area for the access request of the first application 300.

On the other hand, the second recording area 410 includes multiple tracks relatively on an inner periphery, serving as a recording area for the access request of the second application 301. In the meantime, signs HP1, HP2 mean the positions of a head for reading/writing data from/to the disk 110.

The OS 200 receives the data access requests REQ1, REQ2 relating to the recording/reproducing operation from the applications 300, 301 (step S1). Assume that the read access request REQ1 for reading stream data recorded on the disk 110 is made from the first application 300 for the reproduction operation. On the other hand, assume that a write access request for writing stream data received by the TV tuner 14 to the disk 110 is made from the second application 301 for the recording operation.

After receiving the access requests (REQ1, REQ2), the file system 210 specifies recording areas (400, 410) which are access objects on the disk 110 (step S2). More specifically, the file system 210 sets up an address on the disk 110 which is a read/write object of the stream data.

The disk driver 220 issues a command (COM) to the disk drive 11 in accordance with the access requests (REQ1, REQ2) transferred from the file system 210 and each address (step S3). The command instructs to access (read/write) data of each sector from the disk 110.

That is, the disk driver 220 transfers a read command to the HDC 113 of the disk drive 11 according to the data access request REQ1 from the first application 300. The read command includes addresses (track address and sector address) contained in the first recording area 400 on the disk 110. A write command is transferred to the HDC 113 of the disk drive 11 according to the data access request REQ2 from the second application 301. The write command includes addresses (track address and sector address) contained in the second recording area 401 on the disk 110.

In the disk drive 11, its CPU 12 controls the read/write mechanism following a command (COM) received through the HDC 113 and executes the data read/write operation from/to the disk 110 (step S4).

That is, following the data access request REQ1 from the first application 300, the CPU 112 positions the head included in the read/write mechanism at a position HP1 contained in the first recording area 400 as shown in FIG. 4. The head reads stream data from multiple sectors contained in the corresponding position HP1. On the other hand, following the data access request REQ2 from the second application 301, the CPU 112 positions the head included in the read/write mechanism at a position HP2 contained in the second recording area 410 as shown in FIG. 4. The head writes stream data to multiple sectors contained in the position HP2.

(Management on Buffer Area)

As described above, the host CPU 10 executes read/write control of the disk drive 11 according to data access requests from the plural applications 300, 301 under the control of the OS 200. The host CPU 10 transfers stream data corresponding to the data access request to the disk drive 11. At this time, the disk driver 220 executes pre-read operation or post-write operation from or to the disk 110 in order to achieve transfer of the stream data under a predetermined condition.

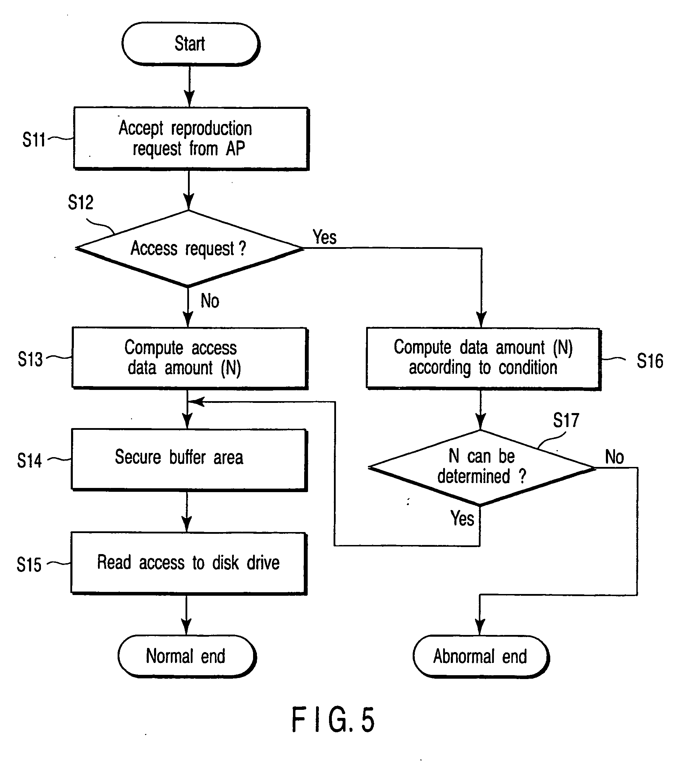

Next, the buffer area management operation for the memory 12 to be executed by the disk driver 220 upon the pre-read operation or post-write operation will be described with reference to FIG. 2 and the flow chart of FIG. 5.

The performance of the disk drive 11 and the specification requested by the applications 300, 301 upon data access include the following items.

That is, the performance of the disk drive 11 includes head traveling speed (Hs: for example, traveling distance of one track per second) and data transfer speed (Ds: megabit/sec). The specification of the applications 300, 301 includes throughput (that is, data transfer speed Ts: megabit/sec) and a maximum delay time (Mt seconds) of a response corresponding to an access request.

Next, an operation which occurs when a data access request accompanied by a stream data reproducing operation is made from the application 300 or 301 will be described with reference to the flow chart of FIG. 5.

If the OS 200 accepts a data access request from the application 300 or 301, the file system 210 and the disk driver 220 execute a sequence of processings as shown in FIG. 3 (step S11). Here, as for the data access request, a case where it is made from only the first application 300, for example, is assumed (NO in step S12).

The disk driver 220 computes a data amount (N: minimum value) for securing a buffer area following the request (step S13). That is, the disk driver 220 computes a data amount (N) according to a conditional expression "N = Dt x Ds, where Dt is data transfer time" on the basis of the data transfer speed (Ds: megabit/sec) obtained from the disk drive 11. The disk driver 220 secures a buffer area corresponding to the computed data amount (N) in the memory 12 (step S14).

Subsequently, the disk driver 220 issues a command following an access request (read command) and executes a read access in the disk drive 11 (step S15). The disk drive 11 transfers stream data read from the disk 110 to the disk driver 220 in response to the read command. The disk driver 220 temporarily stores the transferred stream data in the secured buffer area.

On the other hand, it is assumed that, for example, when an access request is accepted from the second application 310, the access request from the first application 300 has been already accepted (YES in step S12).

In such a case, the disk driver 220 computes a data amount (N) through pre-read operation under a predetermined condition (step S16). The predetermined condition concerns throughput (data transfer speed Ts: megabit/sec) requested by the aforementioned application and maximum delay time (Mt second) of response. More specifically, a conditional expression (1) relating to the maximum delay time (Mt) and a conditional expression (2) relating to throughput (Ts) are assumed:

$$Mt < (Ht + Dt) \quad \ldots\ldots (1)$$

$$Ts < N/(Ht + Dt) \quad \ldots \ (2)$$

where Ht is a head traveling time, and Dt is data transfer time as described above. The head traveling time Ht is expressed by the following expression (3):

$$Ht = |X - Y| \times Hs \quad \ldots \ (3)$$

Where Hs means a head traveling speed as described above. X means a head position (HP1) when the stream data is read from the recording area 400 of the disk 110 according to an access request from the first application 300 as shown in, for example, FIG. 4. Likewise, Y means a head position (HP2) when the stream data is read from the recording area 410 in the disk 110 according to an access request from the second application 301.

Thus, if the access request from the first application 301 is processed when the access request from the first application 300 is being accepted, the head traveling time Ht can be computed from the aforementioned expression (3).

The data transfer time Dt is expressed according to the following expression (4).

$$Dt = N/Ds \quad \ldots \ (4)$$

The disk driver 220 computes a data amount (N) which satisfies the aforementioned conditional expression (2). At this time, if the data amount (N) which satisfies the conditional expression (1) cannot be determined to a throughput (data transfer speed Ts) requested by an application, for example, the disk driver 220 is disabled for accessing and then an abnormal end occurs (NO in step S17).

On the other hand, if the data amount (N) which satisfies the aforementioned relational equation (2) can be determined, the disk driver 220 secures a buffer area corresponding to the computed data amount (N) in the memory 12 (YES in step S17, S14).

That is, if there is a data access request from the plural applications 300, 301, the disk driver 220 computes a data amount (N) for securing a buffer area which satisfies throughput (Ts) accompanied by that data access request. The disk driver 220 secures a buffer area corresponding to the data amount (N) and executes access control (issue of command) of the disk drive 11 following the data access request.

According to this embodiment, as shown in FIG. 2, the disk driver 220 secures a buffer area 120 in, for example, the memory 12 corresponding to the data access request from the first application 300. On the other hand, the disk driver 220 secures a buffer area 121 which satisfies the.above-described condition corresponding to the data access request from the second application 300. As a result, the disk driver 220 temporarily stores stream data transferred from the disk drive 11 in the buffer area 120 corresponding to the data access request from the first application 300.

Additionally, the disk driver 220 temporarily stores stream data transferred from the disk drive 11 in the buffer area 121 corresponding to the data access request from the second application 300.

Thus, the video recorder 100 outputs stream data reproduced from, for example, the recording area 400 on the disk 110 on the display unit 15, according to the data access request from the first application 300. Further, the stream data can be read in advance from the recording area 410 on the disk 110, for example, according to the data access request from the second application 300 and temporarily stored in the buffer area 121. In other words, the stream data can be read in advance so as to satisfy the throughput condition accompanied by the data access request from the second application 300 in order to achieve a reproducing operation for outputting to the display unit 15.

Meanwhile, this embodiment explains control of the buffer area for plural applications to make the data access request for their reproducing operation. This embodiment is not restricted to this example, but may be applied to a case where the first application 300 executes a read access request accompanied by the reproducing operation while the second application makes a write access request accompanied by the recording operation. In this case, the disk driver 220 secures the buffer area 121 necessary for post-write of the stream data in the recording area 410 on the disk 110 following the data access request from the second application 301.

(Another Embodiment)

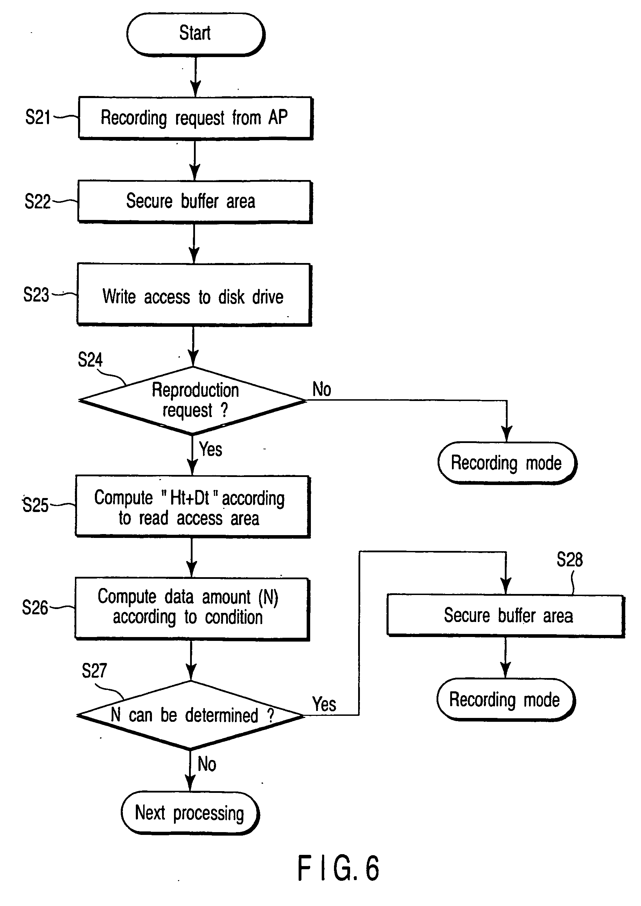

FIG. 6 is a flow chart according to another embodiment.

This embodiment assumes a recording/reproducing operation such as time-shift, in which a reproduction request occurs during recording operation. Hereinafter, this embodiment will be described in detail with reference to a flow chart of FIG. 6.

For example, if a data access request accompanied by the recording operation is accepted from the first application 300, the OS 200 makes the file system 210 and the disk driver 220 execute a series of processings (step S21). That is, the disk driver 220 secures a buffer area following a write access request (step S22).

Next, the disk driver 220 issues a command (write command) following the access request and executes the write access to the disk drive 11 (step S23). The disk driver 11 receives stream data which should be recorded corresponding to the write command and writes to, for example, the recording area 400 on the disk 110.

Here, if the recording operation is suspended, and a reproduction request from the first application 300 is not made, the OS 200 continues data access in a recording mode (NO in step S24).

On the other hand, if the recording operation is suspended, and a reproduction request from the first application 300 is made, the disk driver 220 computes the data amount (N) according to a predetermined condition (step S26). In this case, the disk driver 220 computes the expression "HT + Dt" on the basis of the read access area on the disk 110 (assumed to be the recording area 410 shown in FIG. 4 herein) (step S25).

That is, the head traveling time Ht is computed by the above expression (3). In this case, X means a head position (HP1) when stream data is written to the recording area 400 on the disk 110 according to a write access request from the first application 300. Likewise, Y means a head position (HP2) when stream data is read from the recording area 410 on the disk 110 according to a read access request from the first application 300. Dt means data transfer time as described above.

The disk driver 220 computes a data amount (N) which satisfies the above conditional expression (2). At this time, if the data amount (N) which satisfies the conditional expression (1) cannot be determined to a throughput (data transfer speed Ts) requested by the first application 300, the disk driver 220 is disabled to access following the reproduction request, and continues write access following, for example, the recording request (No in step S27).

On the other hand, when the data amount (N) which satisfies the above conditional expression (2) can be determined, the disk driver 220 secures a buffer area corresponding the computed data amount (N) in the memory 12 (YES in step S27, S28).

In short, this embodiment enables the write access accompanied by the recording operation to be interrupted by the same application, for example, the first application 300 so as to execute a read access following the reproducing operation. In this case, the disk driver 220 secures a buffer area in the memory 12 to satisfy the throughput accompanied by the data access request (read access request) from the first application 300.

Therefore, the video recorder 100 is capable of executing a recording/reproducing operation such as time-shift for executing the reproducing operation following a data access request from the first application 300, during recording operation for storing stream data in the recording area 400 on the disk 110, for example.

In the meantime, although in this embodiment and another embodiment, an independent video recorder 100 is assumed, these embodiments are not restricted to this example, but can be applied to, for example, a recording/reproducing apparatus incorporated in a digital TV unit.

As described in detail above, according to this embodiment, even if plural data access requests occur to the disk drive, the buffer management can be carried out so as to satisfy such predetermined conditions as access performance of the disk drive and throughput (data transfer speed) of application programs.

Therefore, the present invention can be applied to a recording/reproducing apparatus which accesses stream data in the disk drive to record or reproduce it so as to guarantee specified throughputs upon multiple data accesses.

**Claims**

1. A disk storage apparatus comprising:

   a disk drive unit (11) adapted for reading and/or writing data from or to a disk medium (110);
   a memory unit (12) adapted for, when the disk drive unit (11) accesses the disk medium (110), securing a buffer area in a memory unit (12) for storing data to be read or written from or to the disk medium (110); and
   a controller (10);

   **characterized in that**
   when plural data access requests from a first application (300) and a second application (301) occur to the disk medium (110), the controller is adapted to secure the buffer area for each of the plural data access requests in accordance with a predetermined condition,
   the controller (10) is adapted to compute a data amount (N) in accordance with the following expressions:

$$Mt < (Ht+Dt),$$

where Mt is a requested maximum delay time of response, Ht is a travelling time of a head of the disk drive unit, and Dt is a data transfer time,

$$Ts < N/(Ht+Dt)$$

where Ts is a requested data throughput,

$$Ht = |X-Y| \ Hs$$

where |X-Y| is the difference of head positions according to access requests from the first application and the second application, and Hs is a travelling speed of the head, and

$$Dt = N/Ds$$

where Ds is a data transfer speed, and
to secure the buffer area (120, 121) corresponding to the data amount (N) in the memory unit (12).

2. The disk storage apparatus according to claim 1, **characterized by** further comprising:

means (210) adapted for specifying an access area corresponding to each of the plural data access requests on the disk medium (110) by receiving the plural data access requests from the first application (300) and the second application (301), and
wherein the controller (220) is adapted to issue a command containing a designation of the access area specified by the means (210) and to execute an access control to the disk medium (110) in accordance with each of the plural data access requests.

3. The disk storage apparatus according to claim 1, **characterized in that** the plural data access requests are generated and accompanied by execution of recording operation or reproducing operation by the first and the second applications (300, 301).

4. A method of executing data access in a recording/reproducing apparatus having a disk drive unit (11) which reads or writes data from or to a disk medium (110) and a memory unit (12) to secure a buffer area (120, 121) for storing data to be read from or written to the disk medium (110), the method comprising the steps of:

accepting (S11) plural data access requests for accessing the disk medium (110) from a first application (300) and a second application (301);
computing (S13) a data amount (N) -for accessing to the disk medium (110) in accordance with the conditional expression;

$$Dt = N/Ds$$

where Dt is a data transfer time and Ds is a data transfer speed, and
securing (S14) the buffer area according to the data amount (N) in the memory unit; and
executing (S15) data access control upon the disk drive unit (11) according to each of the plural data access requests using the buffer area (120, 121);

**characterized by** further comprising the steps of:

computing (S16) a data amount (N) in accordance with the conditional expressions:

$$Mt < (Ht+Dt),$$

where Mt is a requested maximum delay time of response, and Ht is a travelling time of a head of the disk drive unit,

$$Ts < N/(Ht+Dt)$$

where Ts is a requested data throughput, and

$$Ht = |X-Y|\ Hs$$

where |X-Y| is the difference of head positions according to access requests from the first application and the second application, and Hs is a travelling speed of the head.

5. The method according to claim 4, **characterized by** further comprising steps of:

specifying an access area corresponding to each of the plural data access requests on the disk medium (S2); and upon the data access control, receiving a designation of the access area and executing the data access to a disk drive unit according to each of the plural data access requests using the buffer area (S4).

6. The method according to claim 4, **characterized in that**:

in the step of accepting (S21), a write access request to the disk drive is accepted;
in the step of securing (S22), the buffer area is secured in accordance with the write access request;
in the step of executing (S23), the disk drive unit is accessed according to the write access request; and
if a read access request to the disk drive unit is accepted, the data access control interrupts the data access according to the write access request and secures a buffer area according to the read access request (YES in S24, S28).

**Patentansprüche**

1. Plattenspeichervorrichtung, mit:

einer Plattenlaufwerkeinheit (11), die zum Lesen und/oder Schreiben von Daten aus oder in ein Plattenmedium (110) angepasst ist;
einer Speichereinheit (12), die angepasst ist, wenn die Plattenlaufwerkeinheit (11) auf das Plattenmedium (110) zugreift, einen Pufferbereich in einer Speichereinheit (12) zum Speichern von Daten zu sichern, die aus oder in das Plattenmedium (110) zu lesen oder zu schreiben sind; und
einem Controller (10);

**dadurch gekennzeichnet, dass**,
wenn sich mehrere Datenzugriffsanforderungen von einer ersten Anwendung (300) und einer zweiten Anwendung (301) an dem Plattenmedium ereignen, der Controller angepasst ist, den Pufferbereich für jeden der mehreren Datenzugriffsanforderungen in Übereinstimmung mit einer vorbestimmten Bedingung zu sichern;
der Controller (10) angepasst ist, um eine Datenmenge (N) in Übereinstimmung mit den folgenden Ausdrücken zu berechnen:

$$Mt < (Ht+Dt),$$

wobei Mt eine angeforderte maximale Antwortverzögerungszeit, Ht eine Laufzeit eines Kopfes der Plattenlaufwerkeinheit und Dt eine Datentransferzeit ist,

$$Ts < N/(Ht+Dt),$$

wobei Ts ein angeforderter Datendurchsatz ist,

$$Ht = |X-Y| \; Hs,$$

wobei |X-Y| die Differenz der Kopfpositionen gemäß Zugriffanforderungen von der ersten Anwendung und der zweiten Anwendung und Hs eine Laufgeschwindigkeit des Kopfes ist, und

$$Dt = N/Ds$$

wobei Ds eine Datentransfergeschwindigkeit ist, und
um den Pufferbereich (120, 121) entsprechend der Datenmenge (N) in der Speichereinheit (12) zu sichern.

2. Plattenspeichervorrichtung gemäß Anspruch 1, ferner **gekennzeichnet durch**:

ein Mittel (210), das zum Spezifizieren eines Zugriffsbereichs angepasst ist, der jeder der mehreren Datenzugriffsanforderungen auf dem Plattenmedium (110) entspricht, **durch** Empfangen der mehreren Datenzugriffsanforderungen von der ersten Anwendung (300) und der zweiten Anwendung (301); und
wobei der Controller (120) angepasst ist, um einen Befehl auszugeben, der eine Kennzeichnung des **durch** das Mittel (210) spezifizierten Zugriffsbereich enthält, und um eine Zugriffssteuerung auf das Plattenmedium (110) in Übereinstimmung mit jeder der mehreren Datenzugriffsanforderungen auszuführen.

3. Plattenspeichervorrichtung gemäß Anspruch 1, **dadurch gekennzeichnet, dass** die mehreren Datenzugriffsanforderungen erzeugt werden und von der Ausführung eines Aufzeichnungsvorgangs oder eines Wiedergabevorgangs durch die ersten und zweiten Anwendungen (300, 301) begleitet werden.

4. Verfahren zum Ausführen eines Datenzugriffs in einer Aufzeichnungs/Wiedergabevorrichtung mit einer Plattenlaufwerkeinheit (11), die Daten aus oder in ein Plattenmedium (110) liest oder schreibt, und einer Speichereinheit (12), um einen Pufferbereich (120, 121) zum Speichern von Daten zu sichern, die aus oder in das Plattenmedium (110) zu lesen oder zu schreiben sind, wobei das Verfahren die folgenden Schritte umfasst:

Annehmen (S11) mehrerer Datenzugriffsanforderungen zum Zugreifen auf das Plattenmedium (110) von einer ersten Anwendung (300) und einer zweiten Anwendung (301);
Berechnen (S13) einer Datenmenge (N) zum Zugreifen auf das Plattenmedium (110) in Übereinstimmung mit dem Bedingungsausdruck:

$$Dt = N/Ds$$

wobei Dt eine Datentransferzeit und Ds eine Datentransfergeschwindigkeit ist, und
Sichern (S14) des Pufferbereichs gemäß der Datenmenge (N) in der Speichereinheit; und
Ausführen (S15) einer Datenzugriffssteuerung auf die Plattenlaufwerkseinheit (11) gemäß jeder der mehreren Datenzugriffsanforderungen mit dem Pufferbereich (120, 121) ;
ferner **gekennzeichnet durch** die folgenden Schritte:

Berechnen (S16) einer Datenmenge (N) in Übereinstimmung mit den Bedingungsausdrücken:

$$Mt < (Ht+Dt),$$

wobei Mt eine angeforderte maximale Antwortverzögerungszeit und Ht eine Laufzeit eines Kopfes der Plattenlaufwerkeinheit ist,

$$Ts < N/(Ht+Dt),$$

wobei Ts ein angeforderter Datendurchsatz ist, und

$$Ht = |X-Y| \; Hs,$$

wobei |X-Y| die Differenz der Kopfpositionen gemäß Zugriffanforderungen von der ersten Anwendung und der zweiten Anwendung und Hs die Laufgeschwindigkeit des Kopfes ist.

5. Verfahren gemäß Anspruch 4, ferner **gekennzeichnet durch** folgende Schritte:

Spezifizieren eines Zugriffsbereichs entsprechend jeder einer Mehrzahl von Datenzugriffsanforderungen auf das Plattenmedium (S2); und
bei der Datenzugriffsteuerung Empfangen einer Kennzeichnung des Zugriffsbereichs und Ausführen des Datenzugriffs auf eine Plattenlaufwerkseinheit gemäß jeder der mehreren Datenzugriffsanforderungen mit dem Pufferbereich (S4).

6. Verfahren gemäß Anspruch 4, **dadurch gekennzeichnet, dass**:

bei dem Schritt des Annehmens (S21) eine Schreibzugriffsanforderung auf das Plattenlaufwerk angenommen wird;
bei dem Schritt des Sicherns (S22) der Pufferbereich in Übereinstimmung mit der Schreibzugriffsanforderung gesichert wird;
bei dem Schritt des Ausführens (S23) auf die Plattenlaufwerkseinheit in Übereinstimmung mit der Schreibzugriffsanforderung zugegriffen wird; und
wenn eine Lesezugriffsanforderung auf die Plattenlaufwerkeinheit angenommen wird, die Datenzugriffssteuerung den Datenzugriff gemäß der Schreibzugriffsanforderung unterbricht und einen Pufferbereich gemäß der Lesezugriffsanforderung (JA bei S24, S28) sichert.

**Revendications**

1. Appareil de stockage sous forme de disque comprenant :

une unité de pilotage de disque (11) qui est adaptée pour lire et/ou écrire des données à partir d'un support sous forme de disque (110) ou sur ce même support ;
une unité de mémoire (12) qui est adaptée pour, lorsque l'unité de pilotage de disque (11) accède au support sous forme de disque (110), sécuriser une zone de tampon dans une unité de mémoire (12) pour stocker des données destinées à être lues à partir du support sous forme de disque (110) ou destinées à être écrites dessus ; et
un contrôleur (10),

**caractérisé en ce que**, lorsque plusieurs requêtes d'accès aux données en provenance d'une première application (300) et d'une seconde application (301) surviennent sur le support sous forme de disque (110), le contrôleur est adapté pour sécuriser la zone de tampon pour chacune des plusieurs requêtes d'accès aux données conformément à une condition prédéterminée,
le contrôleur (10) est adapté pour calculer une quantité de données (N) conformément aux expressions qui suivent :

$$Mt < (Ht + Dt),$$

où Mt est un temps de retard maximum demandé en requête, Ht est un temps de déplacement d'une tête de l'unité de pilotage de disque et Dt est un temps de transfert de données,

$$Ts < N/(Ht + Dt)$$

où Ts est un débit de données demandé en requête,

$$Ht = |X\text{-}Y|\, Hs$$

où |X-Y| est la différence de positions de tête conformément à des requêtes d'accès en provenance de la première application et de la seconde application et Hs est une vitesse de déplacement de la tête, et

$$Dt = N/Ds$$

où Ds est une vitesse de transfert de données, et
pour sécuriser la zone de tampon (120, 121) qui correspond à la quantité de données (N) dans l'unité de mémoire (12).

2. Appareil de stockage sous forme de disque selon la revendication 1, **caractérisé en ce qu'**il comprend en outre :

un moyen (210) qui est adapté pour spécifier une zone d'accès qui correspond à chacune des plusieurs requêtes d'accès aux données sur le support sous forme de disque (110) en recevant les plusieurs requêtes d'accès aux données depuis la première application (300) et la seconde application (301),
dans lequel le contrôleur (220) est adapté pour délivrer une commande qui contient une désignation de la zone d'accès qui est spécifiée par le moyen (210) et pour exécuter une commande d'accès sur le support sous forme de disque (110) conformément à chacune des plusieurs requêtes d'accès aux données.

3. Appareil de stockage sous forme de disque selon la revendication 1, **caractérisé en ce que** les plusieurs requêtes d'accès aux données sont générées et accompagnées par l'exécution d'une opération d'enregistrement ou d'une opération de reproduction par les première et seconde applications (300, 301).

4. Procédé d'exécution d'un accès aux données dans un appareil d'enregistrement/reproduction qui comporte une unité de pilotage de disque (11) qui lit ou écrit des données à partir d'un support sous forme de disque (110) ou sur celui-ci et une unité de mémoire (12) pour sécuriser une zone de tampon (120, 121) pour stocker des données destinées à être lues à partir du support sous forme de disque (110) ou destinées à être écrites dessus, le procédé comprenant les étapes de :

acceptation (S11) de plusieurs requêtes d'accès aux données pour accéder au support sous forme de disque (110) depuis une première application (300) et une seconde application (301) ;
calcul (S13) d'une quantité de données (N) pour accéder au support sous forme de disque (110) conformément à l'expression conditionnelle :

$$Dt = N/Ds$$

où Dt est un temps de transfert de données et Ds est une vitesse de transfert de données ; et
assurance (S14) de la zone de tampon conformément à la quantité de données (N) dans l'unité de mémoire ; et
exécution (S15) d'une commande d'accès aux données sur l'unité de pilotage de disque (11) conformément à chacune des plusieurs requêtes d'accès aux données en utilisant la zone tampon (120, 121),

**caractérisé en ce qu'**il comporte en outre les étapes de :

calcul (S16) d'une quantité de données (N) conformément aux expressions conditionnelles :

$$Mt < (Ht + Dt),$$

où Mt est un temps de retard maximum demandé en requête et Ht est un temps de déplacement d'une tête de l'unité de pilotage de disque,

$$Ts < N/(Ht + Dt)$$

où Ts est un débit de données demandé en requête, et

$$Ht = |X\text{-}Y| \, Hs$$

où |X-Y| est la différence de positions de tête conformément à des requêtes d'accès en provenance de la première application et de la seconde application et Hs est une vitesse de déplacement de la tête.

**5.** Procédé selon la revendication 4, **caractérisé en ce qu'**il comprend en outre les étapes de :

spécification d'une zone d'accès qui correspond à chacune des plusieurs requêtes d'accès aux données sur le support sous forme de disque (S2) ; et
lors de la commande d'accès aux données, réception d'une désignation de la zone d'accès et exécution de l'accès aux données sur une unité de pilotage de disque conformément à chacune des plusieurs requêtes d'accès aux données en utilisant la zone tampon (S4).

**6.** Procédé selon la revendication 4 **caractérisé en ce que** :

au niveau de l'étape d'acceptation (S21), une requête d'accès en écriture sur l'unité de disque est acceptée ;
au niveau de l'étape de sécurisation (S22), la zone tampon est sécurisée conformément à la requête d'accès en écriture ;
au niveau de l'étape d'exécution (S23), l'unité de pilotage de disque est accédée conformément à la requête d'accès en écriture ; et
si une requête d'accès en lecture sur l'unité de pilotage de disque est acceptée, la commande d'accès aux données interrompt l'accès aux données conformément à la requête d'accès en écriture et sécurise une zone de tampon conformément à la requête d'accès en lecture (OUI au niveau de S24, S28).

Video recorder

CODEC 13

TV tuner 14

Disk drive 11

110

111

113

112

HDC

CPU

Host CPU 10

Display unit 15

Memory

12

100

**F I G. 1**

Start

Accept access request from AP — S1

Specify access area on disk — S2

Access each sector on disk — S3

R/W operation of disk drive — S4

Next processing

**F I G. 3**

HP1

HP2

110

400

111

410

**F I G. 4**

13

Display unit —15

TV tuner —14

CODEC —13

300— AP    AP —301

REQ1    REQ2

12

120— Buffer area
121— Buffer area

OS —200

File system —210

Disk driver —220

COM

Disk drive —11

FIG. 2

```
                    ┌──────────┐
                    │  Start   │
                    └──────────┘
                          │
                          ▼
         ┌─────────────────────────────┐
   S11──│   Accept reproduction         │
         │   request from AP            │
         └─────────────────────────────┘
                          │
   S12                    ▼
              ◇─────────────────────◇        Yes
              ◇   Access request ?   ◇───────────┐
              ◇─────────────────────◇            │
                          │                       │
                          │ No                    │
                          ▼                       ▼
         ┌─────────────────────┐      ┌─────────────────────────┐
   S13──│  Compute access      │      │ Compute data amount (N) │──S16
         │  data amount (N)     │      │ according to condition  │
         └─────────────────────┘      └─────────────────────────┘
                          │                       │
                          │                       │        S17
                          ▼                       ▼
         ┌─────────────────────┐      ◇─────────────────────◇   No
   S14──│  Secure buffer area  │      ◇   N can be          ◇────────┐
         └─────────────────────┘      ◇   determined ?      ◇        │
                          │           ◇─────────────────────◇        │
                          ▼                  │ Yes                    │
         ┌─────────────────────┐             │                       │
   S15──│ Read access to disk  │◄────────────┘                       │
         │ drive                │                                     │
         └─────────────────────┘                                     │
                          │                                           │
                          ▼                                           ▼
              ┌──────────────────┐                        ┌──────────────────┐
              │   Normal end     │                        │  Abnormal end    │
              └──────────────────┘                        └──────────────────┘
```

# F I G. 5

Start

S21 — Recording request from AP

S22 — Secure buffer area

S23 — Write access to disk drive

S24

Reproduction request ? — No → Recording mode

Yes

S25 — Compute " Ht+Dt " according to read access area

S26 — Compute data amount (N) according to condition

S27

N can be determined ? — Yes

S28

Secure buffer area

Recording mode

No

Next processing

FIG. 6

16